# EUROPÄISCHE PATENTSCHRIFT

(11) **EP 2 138 667 B1**
(45) Veröffentlichungstag und Bekanntmachung des Hinweises auf die Patenterteilung: **12.10.2011**
(21) Anmeldenummer: 08011500.9
(22) Anmeldetag: 25.06.2008
(51) Int. Cl.: E06B 3/67, C03C 17/34

(54) **Dreifach-Isolierverglasung**
Threefold insulating glazing
Triple vitrage isolant

(43) Veröffentlichungstag der Anmeldung: 30.12.2009
(73) Patentinhaber: Scheuten S.à.r.l., 5916 PA Venlo (NL)
(72) Erfinder: Villari, Valentino, Dr., 41063 Mönchengladbach (DE)
(74) Vertreter: Jostarndt, Hans-Dieter

(56) Entgegenhaltungen:
- WO-A-03/033427
- CA-A1- 2 330 908
- DE-C1- 3 239 753
- DE-U1- 29 615 243
- US-A- 4 235 048
- US-A1- 2006 246 301
- BERNING: "principles of design of architectural coatings" APPLIED OPTICS, OSA, OPTICAL SOCIETY OF AMERICA, WASHINGTON, DC, Bd. 22, Nr. 24, 15. Dezember 1983 (1983-12-15), Seiten 4127-4141, XP002090092 ISSN: 0003-6935

## Beschreibung

Die vorliegende Erfindung betrifft eine Dreifach-Isolierverglasung nach dem Oberbegriff des Anspruchs 1.

Eine Dreifach-Isolierverglasung ist zum Beispiel aus der Patentanmeldung EP0854264 bekannt. Dabei weist die äußere Glasscheibe auf ihrer Außenseite eine Beschichtung zur Erhöhung der Oberflächentemperatur sowie eine hydrophobe Beschichtung auf, um der Kondensation an der Außenseite der Verglasung entgegenzuwirken. Zudem weisen die innere und die äußere Glasscheibe, welche um die mittlere Glasscheibe angeordnet sind, auf der jeweils dem Zwischenraum zugewandten Seite eine Wärmedämmschicht auf.

Auch in der Patentanmeldung EP1495206 wird eine Dreifach-Isolierverglasung beschrieben. Dabei weist die äußere Glasscheibe auf ihrer Außenseite ebenfalls eine Beschichtung zur Erhöhung der Oberflächentemperatur sowie eine hydrophobe Beschichtung auf, um der Kondensation an der Außenseite der Verglasung entgegenzuwirken. Die dem Innenraum zwischen der mittleren Glasscheibe und der äußeren Glasscheibe zugewandten Seiten der äußeren Glasscheibe und der mittleren Glasscheibe weisen dabei jedoch keine Wärmedämmschicht auf. Lediglich die dem Innenraum zwischen der inneren Glasscheibe und der mittleren Glasscheibe zugewandten Seiten der inneren Glasscheibe und der mittleren Glasscheibe können eine oder mehrere Wärmedämmschichten aufweisen.

Zudem offenbart die Patentanmeldung CA2330908 eine Dreifachisolierverglasung mit zwei unterschiedlichen Positionen, die einen Wärmekollektor mit einem Fluid zur Speicherung von Wärme umfasst, wobei mindestens eine eisenoxidarme Glasscheibe, eine spezielle Low-E-Schicht, welche die Emission von langwelligen Infrarotstrahlen reduziert, und mindestens eine auf einer äußeren Scheibe aufgebrachte Antireflexschicht vorgesehen ist.

Eine oder mehrere Wärmedämmschichten erlauben es dabei, gute bis sehr gute Isolationswerte zu erreichen.

In der Tat können eine oder mehrere Wärmedämmschichten die Isolation verbessern, da solche Schichten zum Beispiel einfallende Strahlung insbesondere im Infrarotbereich reflektieren können. Die Wärmeübertragung durch Strahlungsaustausch insbesondere im Infrarotbereich kann daher durch die Reflexion reduziert werden.

Über die bloßen Isolationswerte hinaus wird jedoch auch der Solargewinn als Eigenschaft für Verglasungen zunehmend wichtiger. Der Solargewinn ist dabei insbesondere bei der Verglasung von Passivhäusem wichtig. Als Solargewinn kann dabei der Temperaturanstieg in einem Gebäude, einer Struktur oder einem Objekt bezeichnet werden, der auf die Sonneneinstrahlung zurückzuführen ist. Der Solargewinn ist demnach der Anteil der Sonneneinstrahlung, der Heizenergie ersetzen kann. Der Solargewinn kann dabei zum Beispiel über den g-Wert ermittelt werden. Der g-Wert misst den Energiedurchlass von außen nach innen in Prozent. Der Solargewinn kann demnach bei einem größeren g-Wert steigen.

Dabei wirken sich eine oder mehrere Wärmedämmschichten negativ auf den Solargewinn aus, da zumindest ein Teil der einfallenden Sonnenstrahlung insbesondre im Infrarotbereich daran gehindert wird, durch die Verglasung beziehungsweise durch die Wärmedämmschicht(en) zu dringen und den Raum hinter der Verglasung aufzuheizen.

Es besteht demnach der Bedarf, eine Verglasung bereitzustellen, welche es ermöglicht, die Wärmeverluste und insbesondere die Transmissionswärmeverluste sowie die nötige Heizenergie zum Erreichen einer angenehmen Temperatur zu reduzieren,

Es ist daher die Aufgabe der vorliegenden Erfindung, eine solche Verglasung bereitzustellen.

Dies wird durch eine Dreifach-Isolierverglasung gemäß Anspruch 1 ermöglicht, welche drei auf Abstand zueinander angeordnete Glasscheiben, die zwei Zwischenräume definieren, umfasst, wobei mindestens eine Glasscheibe auf mindestens einer ihrer Seiten eine Wärmedämmschicht umfasst und mindestens eine Glasscheibe auf mindestens einer ihrer Seiten eine Antireflexschicht umfasst wobei mindestens eine Glasscheibe der Dreifach-Isolierverglasung einen Gehalt an Oxiden, welche Strahlung mit einer Wellenlänge von 100 nm bis 1,1 mm absorbieren, von weniger als 0,05 % aufweist, und wobei ferner die mittlere Glasscheibe, welche zwischen den zwei übrigen Glasscheiben der Dreifach-Isolierverglasung angeordnet ist, mindestens eine Antireflexschicht auf jeder ihrer Seiten aufweist.

3 Die Unteransprüche 2 bis 13 beschreiben dabei bevorzugte Ausführungsformen der erfindungsgemäßen Dreifach-Isolierverglasung.

Bevorzugterweise kann sich dabei mindestens eine Glasscheibe, welche auf mindestens einer ihrer Seiten eine Wärmedämmschicht umfasst, von mindestens einer Glasscheibe, welche auf mindestens einer ihrer Seiten eine Antireflexschicht umfasst, unterscheiden. Eine Glasscheibe kann sich dabei zum Beispiel durch ihre Dicke, ihre Materialbeschaffenheit und/oder ihre Position in der Dreifach-Isolierverglasung von einer anderen Glasscheibe unterscheiden. Dadurch wird es möglich, die erfindungsgemäße Dreifach-Isolierverglasung individuell an besondere Anforderungen anzupassen.

Eine Dreifach-Isolierverglasung, welche drei auf Abstand zueinander angeordnete Glasscheiben umfasst, die zwei Zwischenräume definieren, ermöglicht es dabei, insbesondere dank der Zwischenräume, die mit einem Medium gefüllt sein können, welches eine geringe Wärmeleitfähigkeit aufweist, die Isolierungswirkung der Verglasung zu erhöhen und den Wärmedurchgangskoeffizienten (U-Wert) zu reduzieren.

Ein Medium, welches eine geringe Wärmeleitfähigkeit aufweist, kann in einer bevorzugten Ausführungsform der vorliegenden Erfindung zum Beispiel Luft, Stickstoff, vorzugsweise ein Edelgas, insbesondere Argon, Krypton oder Xenon oder eine Mischung von zwei oder mehreren dieser Stoffe umfassen.

Alternativ kann in mindestens einem der Zwischenräume auch ein gewisses Vakuum erzeugt werden, um die Wärmeleitung durch diesen Zwischenraum zu reduzieren.

Darüber hinaus wird es durch eine Wärmedämmschicht möglich, die Isolierungswirkung der Verglasung weiter zu erhöhen und den Wärmedurchgangskoeffizienten (U-Wert) weiter zu reduzieren.

Eine Wärmedämmschicht kann dabei insbesondere eine Schicht sein, welche zum Beispiel die einfallende Strahlung insbesondere im Infrarotbereich reflektieren kann, wobei die Wärmeübertragung durch Strahlungsaustausch insbesondere im Infrarotbereich daher durch die Reflexion reduziert werden kann.

Insbesondere kann eine Wärmedämmschicht dabei in einer bevorzugten Ausführungsform der vorliegenden Erfindung beispielsweise mindestens eine sogenannte Low-E-Schicht beziehungsweise mindestens einen Low-E-Schichtaufbau umfassen.

Eine Wärmedämmschicht kann dabei insbesondere zum Beispiel eine Edelmetallschicht und bevorzugt eine Silberschicht umfassen. Darüber hinaus kann eine Wärmedämmschicht auch eine oder mehrere Metalloxidschicht(en) umfassen.

Insbesondere kann eine Wärmedämmschicht zum Beispiel eine oder mehrere, insbesondere zwei Zinnoxid-, Zinkoxid- (insbesondere mit Aluminium beziehungsweise Aluminiumoxid dotiert), Titandioxid-, Nickelchromoxid-, Zinkzinnoxid (insbesondere mit Aluminium beziehungsweise Aluminiumoxid dotiert), Siliziumnitrit-Schicht(en) umfassen.

Des Weiteren kann mindestens eine spektralselektive Wärmedämmschicht in weiteren Ausführungsformen der vorliegenden Erfindung bevorzugt verwendet werden, um den Solargewinn zu optimieren. Eine spektralsetektive Wärmedämmschicht kann dabei zum Beispiel eine Wärmedämmschicht sein, welche für Strahlung im nahen Infrarotbereich durchlässig ist, wobei Strahlung im fernen Infrarotbereich jedoch reflektiert wird. Das bedeutet, dass Strahlung im nahen Infrarotbereich durch eine solche spektralselektive Wärmedämmschicht weniger reflektiert werden kann als Strahlung im fernen Infrarotbereich.

Strahlung im nahen Infrarotbereich kann dabei zum Beispiel Strahlung mit einer Wellenlänge von 750 nm bis 25 µm insbesondere von 780 nm bis 3 µm umfassen.

Strahlung im fernen Infrarotbereich kann dabei zum Beispiel Strahlung mit einer Wellenlänge von 26 µm bis 1,1 mm insbesondere von 50 µm bis 1 mm umfassen.

Dabei kann die Infrarotstrahlung, welche aus einem gegebenenfalls beheizten Innenraum nach außen dringen kann, insbesondere Strahlung im fernen

Infrarotbereich umfassen, welche einerseits zum Beispiel durch ein Heizsystem erzeugt werden kann oder andererseits auch von Objekten und/oder Oberflächen, welche mit Strahlung im nahen Infrarotbereich bestrahlt werden, abgestrahlt werden.

Spektralselektive Wärmedämmschichten können dabei insbesondere zum Beispiel mindestens eine Low-E-Schicht beziehungsweise einen Low-E-Schichtaufbau umfassen, welche(r) für Strahlung im nahen Infrarotbereich relativ durchlässig ist, wobei Strahlung im fernen Infrarotbereich jedoch weitestgehend reflektiert wird. Dies kann beispielsweise dadurch erreicht werden, dass die Dicke mindestens einer Metallschicht, insbesondere einer Edelmetallschicht, bevorzugt einer Silberschicht der Wärmedämmschicht um 5 % bis 20% insbesondere um 7 % bis 17 % im Vergleich zu einer normalen Wärmedämmschicht reduziert wird.

In einer bevorzugten Ausführungsform der vorliegenden Erfindung kann eine erfindungsgemäße Dreifach-Isolierverglasung mindestens eine asymmetrische Wärmedämmschicht umfassen. Insbesondere kann eine asymmetrische Wärmedämmschicht zum Beispiel eine asymmetrische Low-E-Schicht beziehungsweise einen asymmetrischen Low-E-Schichtaufbau umfassen.

Asymmetrisch kann dabei bedeuten, dass die Low-E-Schicht beziehungsweise der Low-E-Schichtaufbau so aufgebaut ist, dass ausgehend von der Mitte der Schicht oder des Schichtaufbaus jede der beiden Seiten der Schicht beziehungsweise des Schichtaufbaus Unterschiede aufweist.

Insbesondere kann asymmetrisch auch bedeuten, dass die Wärmedämmschicht beziehungsweise die Low-E-Schicht beziehungsweise der Low-E-Schichtaufbau zum Beispiel um mindestens eine Edelmetallschicht und insbesondere um eine Silberschicht herum, so aufgebaut ist, dass die Schichten, welche vor der Edelmetallschicht insbesondere der Silberschicht aufgebracht werden, sich von der gleichen Anzahl an Schichten, die nach der Edelmetallschicht und insbesondere der Silberschicht aufgebracht werden, unterscheiden.

Schichten können sich dabei beispielsweise durch die Materialbeschaffenheit der Schicht und/oder durch die verwendete Schichtdicke unterscheiden beziehungsweise Unterschiede aufweisen. Darüber hinaus kann eine Wärmedämmschicht auch als asymmetrisch angesehen werden, wenn die Wärmedämmschicht beziehungsweise die Low-E-Schicht beziehungsweise der Low-E-Schichtaufbau zum Beispiel um die Mitte der Wärmedämmschicht beziehungsweise des Schichtaufbaus und/oder um mindestens eine Edelmetallschicht und insbesondere eine Silberschicht herum, so aufgebaut ist, dass sich die Reihenfolge der einzelnen Schichten auf beiden Seiten der Mitte der Wärmedämmschicht beziehungsweise des Schichtaufbaus und/oder einer Edelmetallschicht insbesondere einer Silberschicht unterscheiden.

Eine asymmetrische Wärmedämmschicht kann dabei zum Beispiel dazu genutzt werden, um die Spektralselektivität der Verglasung zu verbessern, sodass möglichst viel Strahlung im nahen Infrarotbereich von außen durch die Verglasung nach innen dringen kann, wobei gleichzeitig möglichst wenig Strahlung im fernen Infrarotbereich von innen durch die Verglasung nach Außen dringen soll. Dies kann dadurch erleichtert werden, dass bei einer asymmetrischen Wärmedämmschicht, ausgehend von der Mitte der Schicht oder des Schichtaufbaus, jede der beiden Seiten der Schicht beziehungsweise des Schichtaufbaus Unterschiede aufweist, sodass es dadurch gegebenenfalls einfacher sein kann, auf der nach außen weisenden Seite der Mitte der Wärmedämmschicht beziehungsweise des Schichtaufbaus durch einen gewissen Aufbau möglichst viel Strahlung im nahen Infrarotbereich von außen durch die Verglasung nach innen dringen zu lassen und durch einen anderen Aufbau auf der anderen nach innen weisenden Seite der Mitte der Wärmedämmschicht beziehungsweise des Schichtaufbaus möglichst wenig Strahlung im fernen Infrarotbereich von innen nach außen dringen zu lassen.

Die Dicke jeder Wärmedämmschicht und/oder jeder Schichten, welche zur einer Wärmedämmschicht beziehungsweise zum Schichtaufbau einer Wärmedämmschicht beiträgt, kann dabei zum Beispiel zwischen 1 nm und 65 nm, bevorzugt zwischen 3 nm und 50 nm, weiter bevorzugt zwischen 4 und 40 nm, weiter bevorzugt zwischen 5 nm und 30 nm, weiter bevorzugt zwischen 6 nm und 25 nm, weiter bevorzugt zwischen 7 nm und 20 nm, weiter bevorzugt zwischen 8 nm und 15 nm betragen, besonders bevorzugt zwischen 10 nm und 13 nm betragen.

Eine beispielhafte Wärmedämmschicht könnte dabei zum Beispiel den folgenden Schichtaufbau umfassen:
- eine Siliziumnitritschicht oder eine ZnSnAlOx-Schicht, welche zum Beispiel 5 nm bis 15 nm, insbesondere 7 nm bis 10 nm dick sein kann,
- eine Zinnoxidschicht oder Siliziumnitritschicht, welche zum Beispiel 20 nm bis 35 nm, insbesondere 25 nm bis 30 nm dick sein kann,
- eine Zinkoxidschicht oder eine TiO₂-Schicht oder eine NiCrOx-Schicht oder eine Schicht aus einer Mischung von zwei oder mehreren dieser Materialien, welche zum Beispiel 2 nm bis 13 nm, insbesondere 3 nm bis 5 nm dick sein kann.
- eine Silberschicht, welche zum Beispiel 5 nm bis 20 nm, insbesondere 10 nm bis 13 nm dick sein kann,
- eine Zinkoxidschicht oder eine TiO₂-Schicht oder eine NiCrOx-Schicht oder eine Schicht aus einer Mischung von zwei oder mehreren dieser Materialien, welche zum Beispiel 2 nm bis 15 nm, insbesondere 5 nm bis 10 nm dick sein kann,
- eine TiO₂-Schicht, welche zum Beispiel 3 nm bis 17 nm, insbesondere 6 nm bis 12 nm dick sein kann,
- eine Zinnoxidschicht oder Siliziumnitritschicht, welche zum Beispiel 10 nm bis 30 nm, insbesondere 15 nm bis 20 nm dick sein kann.

Eine Wärmedämmschicht kann dabei insbesondere mindestens eine, bevorzugt mindestens zwei, weiter bevorzugt mindestens drei, weiter bevorzugt mindestens vier, weiter bevorzugt mindestens fünf, weiter bevorzugt mindestens sechs, besonders bevorzugt mindestens sieben Schicht(en) umfassen, die aus den vorgenannten Schichten ausgewählt werden kann/können.

Eine Zinkoxidschicht kann dabei als Kristallisationsgrundlage für die Silberschicht dienen. Durch die Verwendung einer Zinkoxidschicht als Kristallisationsgrundlage für eine Silberschicht kann eine Silberschicht erhalten werden, welche eine besonders hohe Transmission bei gleichzeitig besonders guter Isolierung beziehungsweise geringer Transmission im IR-Bereich, ermöglicht. Darüber hinaus kann mindestens eine Zinkoxidschicht mittels eines keramischen Targets aufgebracht werden und/oder mit Aluminium beziehungsweise Aluminiumoxid dotiert sein. Dadurch kann die Resistenz der Zinkoxidschicht gegen Korrosion beziehungsweise Oxidation erhöht werden.

Es handelt sich bei einer NiCrOx-Schicht um eine substöchiometrische Oxidschicht, bei der x daher bevorzugterweise ≤4 sein kann. Die NiCrOx-Schicht kann eine benachbarte Silberschicht vor Korrosion beziehungsweise Oxidation schützen. Demnach kann sie dafür sorgen, dass die Silberschicht ihre Funktion über einen sehr langen Zeitraum gewährleisten kann. Eine Variation der Schichtdicke kann zudem auch die Transmission insbesondere im Wellenlängenbereich über 700 nm beeinflussen, da die NiCrOx-Schicht einen Teil der Strahlung insbesondere im Wellenlängenbereich über 700 nm absorbiert.

Bei einer ZnSnAlOx-Schicht handelt es sich um eine substöchiometrische Oxidschicht, bei der x daher bevorzugterweise ≤4 sein kann. Die ZnSnAlOx-Schicht dient dabei zum Beispiel dazu, den gesamten Schichtaufbau vor Korrosion beziehungsweise Oxidation zu schützen.

Darüber hinaus kann die Siliziumnitritschicht dazu dienen, die Wärmedämmschicht beziehungsweise den Schichtaufbau vor Korrosion beziehungsweise Oxidation und/oder vor äußeren mechanischen Einflüssen, wie zum Beispiel das Zerkratzen und/oder das Abreiben zu schützen, da die Siliziumnitritschicht sehr resistent gegen Korrosion beziehungsweise Oxidation und kratzfest sowie abriebfest ist. Zudem kann die Siliziumnitritschicht auch dazu dienen, die Reflexion insbesondere an der Oberfläche der Wärmedämmschicht zu reduzieren. Schließlich kann eine Wärmedämmschicht dank der Verwendung einer Siliziumnitritschicht gegebenenfalls auch bei/nach einem Tempervorgang weitgehend unverändert bleiben.

In einer weiteren bevorzugten Ausführungsform der vorliegenden Erfindung kann die erfindungsgemäße Verglasung mindestens zwei unterschiedliche

Wärmedämmschichten umfassen. Dabei können diese Wärmedämmschichten bevorzugt so angeordnet werden, dass mindestens eine Wärmedämmschicht, welche auf der außen liegenden Glasscheibe der erfindungsgemäßen Dreifach-Isolierverglasung aufgebracht ist, sich von wenigstens einer Wärmedämmschicht unterscheidet, welche auf der innen liegenden Glasscheibe der erfindungsgemäßen Dreifach-Isolierverglasung aufgebracht ist.

Dadurch kann die Wärmedämmschicht, welche auf der außen liegenden Glasscheibe aufgebracht wird, bevorzugt beispielsweise so gestaltet werden, dass sie Strahlung im nahen Infrarotbereich besonders wenig reflektiert. Dabei sollte die Wärmedämmschicht zudem Strahlung im fernen Infrarotbereich, welche von innen auf die Wärmedämmschicht trifft, nach Möglichkeit weiterhin reflektieren. Jedoch ist die Wärmedämmschicht in diesem besonderen Fall auf ihre Durchlässigkeit für Strahlung im nahen Infrarotbereich hin zu optimieren. Eine geringere Reflexion der Strahlung im fernen Infrarotbereich kann dabei in Kauf genommen werden.

Des Weiteren kann dabei die Wärmedämmschicht, welche auf der innen liegenden Glasscheibe aufgebracht wird, bevorzugt beispielsweise so gestaltet werden, dass Strahlung im fernen Infrarotbereich besonders gut reflektiert wird. Dabei sollte die Wärmedämmschicht zudem Strahlung im nahen Infrarotbereich, welche von außen auf die Wärmedämmschicht trifft, bevorzugt möglichst wenig reflektieren. Jedoch ist die Wärmedämmschicht in diesem besonderen Fall auf eine sehr hohe Reflexion von Strahlung im fernen Infrarotbereich hin zu optimieren. Eine geringere Durchlässigkeit für Strahlung im nahen Infrarotbereich kann dabei in Kauf genommen werden.

Somit unterscheidet sich in dieser speziellen Ausführungsform der erfindungsgemäßen Dreifach-Isolierverglasung mindestens eine Wärmedämmschicht, welche auf der außen liegenden Glasscheibe der erfindungsgemäßen Dreifach-Isolierverglasung aufgebracht ist, von wenigstens einer Wärmedämmschicht, welche auf der innen liegenden Glasscheibe der erfindungsgemäßen Dreifach-Isolierverglasung aufgebracht ist. Bevorzugterweise unterscheidet sich mindestens eine Wärmedämmschicht, welche auf der außen liegenden Glasscheibe der erfindungsgemäßen Dreifach-Isolierverglasung aufgebracht ist, von wenigstens einer Wärmedämmschicht, welche auf der innen liegenden Glasscheibe der erfindungsgemäßen Dreifach-Isolierverglasung aufgebracht ist, insbesondere zum Beispiel durch die Dicke einer verwendeten Edelmetallschicht, insbesondere einer Silberschicht. Dabei kann die Edelmetallschicht insbesondere die Silberschicht mindestens einer Wärmedämmschicht, welche auf der außen liegenden Glasscheibe der erfindungsgemäßen Dreifach-Isolierverglasung aufgebracht ist, bevorzugterweise im Vergleich zur Edelmetallschicht, insbesondere zur Silberschicht, welche auf der innen liegenden Glasscheibe der erfindungsgemäßen Dreffach-Isolierverglasung aufgebracht ist, dünner sein. Die dünnere Edelmetallschicht, insbesondere Silberschicht mindestens einer Wärmedämmschicht, welche auf der außen liegenden Glasscheibe der erfindungsgemäßen Dreifach-Isolierverglasung aufgebracht ist, kann es dabei ermöglichen, eine besonders hohe Transmission für Strahlung im nahen Infrarotbereich zu erreichen. Gleichzeitig kann es die dickere Edelmetallschicht, insbesondere Silberschicht, welche auf der innen liegenden Glasscheibe der erfindungsgemäßen Dreifach-Isolierverglasung aufgebracht ist, ermöglichen, besonders viel Strahlung im fernen Infrarotbereich zu reflektieren.

Die unterschiedlichen Wärmedämmschichten können dabei bevorzugt komplementär zusammenarbeiten, wobei mindestens eine der Wärmedämmschichten bevorzugterweise zum Beispiel auf eine sehr hohe Reflexion von Strahlung im fernen Infrarotbereich hin optimiert sein kann und mindestens eine andere der Wärmedämmschichten, welche sich von der ersten unterscheidet, bevorzugterweise zum Beispiel auf eine sehr hohe Durchlässigkeit (Transmission) für Strahlung im nahen Infrarotbereich hin optimiert sein kann, um die spektrale Selektivität und/oder den Solargewinn weiter zu verbessern.

Darüber hinaus umfasst eine erfindungsgemäße Dreifach-Isolierverglasung mindestens zwei Antireflexschichten. Eine Antireflexschicht kann dabei insbesondere jede Schicht sein, welche die Reflexion von Strahlung, insbesondere Strahlung mit einer Wellenlänge von 1 nm bis 1,1 mm, reduzieren kann.

Eine Antireflexschicht kann dabei insbesondere dazu verwendet werden, um die Brechzahl- und/oder richtungsabhängige partielle Reflexion an optischen Grenzflächen, die sich beim Übergang von einem Medium mit einer Brechzahl zu einem anderen Medium mit einer anderen Brechzahl gebildet werden, zu verringern.

Dabei kann die Reflexion zum Beispiel durch eine Strukturierung der Oberfläche reduziert werden und/oder durch mindestens eine Schicht, deren optische Dicke (die sich durch das Multiplizieren der Brechzahl der Schicht mit der Dicke der Schicht ergibt) für eine bestimmte Wellenlänge dem Viertel der Wellenlänge gleicht, und/oder durch mindestens eine Schicht, die sie zur Mittelung der Brechzahlen der Medien, die an der optischen Grenzfläche zusammen kommen" beiträgt.

Eine Antireflexschicht kann beispielsweise mindestens eine Edelmetallschicht und/oder mindestens eine Metalloxidschicht und/oder mindestens eine Fluoridschicht insbesondere mindestens eine Metallfluoridschicht, bevorzugt mindestens eine Magnesiumfluoridschicht, umfassen, welche zum Beispiel aufgesputtert, aufgedampft oder mit einem CVD-Verfahren (Chemical-Vapor-Deposition-Verfahren) aufgebracht wurde.

Dabei kann eine Antireflexschicht im Sinne der vorliegenden Erfindung auch einen Schichtaufbau aus mehreren Schichten umfassen, welcher die Reflexion von Strahlung, insbesondere von Strahlung mit einer Wellenlänge von 1 nm bis 1,1 mm, reduzieren kann. Jede einzelne Schicht kann sich dabei insbesondere zum Beispiel durch die Materialbeschaffenheit, durch die Brechzahl und/oder durch die Schichtdicke von mindestens einer benachbarten Schicht unterscheiden.

Bevorzugt kann eine Antireflexschicht im Sinne der vorliegenden Erfindung dabei mindestens eine Schicht sein, die zur Strukturierung einer optischen Grenzfläche oder zur Mittelung der Brechzahlen der Medien, welche an der optischen Grenzfläche zusammenkommen, beiträgt, um einen gleichmäßigeren Brechzahlübergang zu ermöglichen und dadurch die Reflexion von Strahlung insbesondere von Strahlung mit einer Wellenlänge von 1 nm bis 1,1 mm zu reduzieren sowie gleichzeitig dadurch die Durchlässigkeit (Transmission) für Strahlung, insbesondere von Strahlung mit einer Wellenlänge von 1 nm bis 1,1 mm, zu erhöhen. Zu einer Mittelung der Brechzahlen der Medien, welche an einer optischen Grenzfläche zusammenkommen, kann dabei jede Schicht beitragen, deren Brechzahl zwischen den Brechzahlen der Medien liegt, die an der optischen Grenzfläche zusammenkommen. Bevorzugt wird dabei ein Schichtaufbau aus mehreren Schichten verwendet, wobei jede Schicht eine unterschiedliche Brechzahl aufweist deren Wert zwischen den Brechzahlen der Medien, die an der optischen Grenzfläche zusammen kommen, liegt, sodass der Übergang zwischen den Brechzahlen der beiden Medien die an der optischen Grenzfläche zusammen kommen, nicht direkt in einem Schritt sondern durch die Schichten in mehreren Schritten ermöglicht wird, um die Reflexion zu reduzieren und bevorzugt gleichzeitig dadurch die Transmission zu erhöhen. Eine Reduzierung der Reflexion bevorzugt bei gleichzeitig dadurch erhöhter Transmission kann dabei insbesondere zur Erhöhung des Solargewinns bevorzugt bei weitestgehend gleichem U-Wert genutzt werden, da bei einer erhöhten Transmission mehr Strahlung, welche zum Solargewinn beitragen kann, durch die Verglasung dringen kann.

In einer bevorzugten Ausführungsform der erfindungsgemäßen Dreifach-Isolierverglasung kann die Antireflexschicht eine besonders hohe Transmission im Infrarotbereich und insbesondere eine hohe Transmission für Strahlung im nahen Infrarotbereich aufweisen. Dabei kann die Antireflexschicht, welche eine besonders hohe Transmission für Strahlung im Infrarotbereich und insbesondere im nahen Infrarotbereich aufweist, die Reflexion von Strahlung im Infrarotbereich und insbesondere von Strahlung in nahen Infrarotbereich reduzieren und bevorzugt gleichzeitig dadurch die Durchlässigkeit (Transmission) für Strahlung im-Infrarotbereich, insbesondere von Strahlung im nahen Infrarotbereich, erhöhen. Die Transmission einer erfindungsgemäßen Dreifach-Isolierverglasung kann dabei insbesondere im Infrarotbereich und bevorzugt im nahen Infrarotbereich beispielsweise im Vergleich zu einer Dreifach-Isolierverglasung ohne Antireflexschicht und/oder ohne Antireflexschicht, welche eine besonders hohe Transmission für Strahlung im Infrarotbereich und insbesondere im nahen Infrarotbereich aufweist, zum Beispiel um 2 %, bevorzugt um 3 %, weiter bevorzugt um 5%, besonders bevorzugt um 6 % gesteigert werden. Die erfindungsgemäße Dreifach-Isolierverglasung kann demnach bevorzugt eine hohe Transmission im Infrarotbereich und insbesondere im nahen Infrarotbereich aufweisen. Eine hohe Transmission kann dabei zum Beispiel eine Transmission von mindesten 60 %, bevorzugt mindestens 70 %, weiter bevorzugt mindestens 72 %, weiter bevorzugt mindestens 75 %, weiter bevorzugt mindesten 80 % und besonders bevorzugt mindestens 82 % darstellen. Dadurch lässt sich die Durchlässigkeit der erfindungsgemäßen Dreifach-Isolierverglasung für Strahlung im Infrarotbereich und insbesondere für Strahlung im nahen Infrarotbereich weiter verbessern, um den Solargewinn bevorzugt bei weitestgehend gleichem U-Wert gegebenenfalls weiter zu optimieren.

Eine solche Antireflexschicht, welche eine besonders hohe Transmission im Infrarotbereich und insbesondere eine hohe Transmission für Strahlung im nahen Infrarotbereich aufweist, kann dabei zum Beispiel mindestens eine Siliziumdioxidschicht und/oder mindestens eine Titandioxidschicht und/oder mindestens eine Kombination aus mindestens einer Siliziumdioxidschicht mit mindestens einer Titandioxidschicht umfassen.

Zudem kann auch eine bevorzugt im Nanometer-Bereich aufgeraute Oberfläche einer Glasscheibe als Antireflexschicht und insbesondere Antireflexschicht, welche eine besonders hohe Transmission im Infrarotbereich und insbesondere eine hohe Transmission für Strahlung im nahen Infrarotbereich aufweist, angesehen werden. Die Oberfläche einer Glasscheibe kann dabei zum Beispiel entweder mechanisch (beispielsweise durch Sandstrahlen) und/oder chemisch (beispielsweise durch ein Ätzverfahren) bevorzugt im Nanometer-Bereich aufgeraut werden. Die Größe der Strukturen, die zur Rauheit der Oberfläche beitragen können, kann dabei bevorzugt im Nanometer-Bereich und insbesondere im Bereich von 1 nm bis 100 nm liegen, um die Streuung von Strahlung zu verhindern, beziehungsweise möglichst zu reduzieren.

Solche Antireflexschichten können im Gegensatz zu aufgedampften, aufgesputterten oder per CVD-Verfahren aufgebrachten Antireflexschichten meist eine besonders hohe Transmission im Infrarotbereich und insbesondere eine hohe Transmission für Strahlung im nahen Infrarotbereich aufweisen, da sie besonders wenig Strahlung im Infrarotbereich und insbesondere im nahen Infrarotbereich absorbieren und/oder reflektieren. Dadurch lässt sich der Solargewinn bevorzugt bei weitestgehend gleichem U-Wert gegebenenfalls weiter verbessern.

In einer weiteren bevorzugten Ausführungsform der erfindungsgemäßen Dreifach-Isolierverglasung kann die Antireflexschicht mindestens eine poröse Schicht sein. Die Größe der Poren kann dabei gegebenenfalls bevorzugt so gewählt werden, dass insbesondere keine, beziehungsweise möglichst wenig Streuung der Strahlung auftritt. Bevorzugterweise wird dabei eine Porengröße im Nanometer-Bereich und insbesondere eine Porengröße von 1 nm bis 100 nm angestrebt. Eine poröse Schicht weist dabei dank ihrer Porosität und der gegebenenfalls damit einhergehenden größeren Rauigkeit im Vergleich zu einer Schicht, die nicht porös ist, eine größere Oberfläche auf. Der Kontakt zwischen einer porösen Schicht und einem Substrat erstreckt sich daher über eine größere Fläche, und zudem entstehen beim Abrieb gegebenenfalls größere Reibungskräfte, wodurch die Widerstandsfähigkeit der Schicht und insbesondere die Abriebfestigkeit der Antireflexschicht erhöht werden kann.

Darüber hinaus kann die Brechzahl von porösen Antireflexschichten abhängig von ihrer Materialbeschaffenheit gegebenenfalls zum Beispiel durch eine Veränderung der Porosität bevorzugt progressiv bis zu einer besonders geringen Brechzahl reduziert werden, welche sich bevorzugterweise nur sehr wenig von der Brechzahl der Glasscheibe (die beispielsweise ungefähr 1 beträgt) unterscheiden kann. Somit können poröse Antireflexschichten bevorzugt verwendet werden, um zur Mittelung der Brechzahlen der Medien, welche an der optischen Grenzfläche zusammenkommen, beizutragen und die Reflexion von Strahlung, insbesondere im Infrarotbereich und bevorzugt im nahen Infrarotbereich zu reduzieren, wobei bevorzugt dadurch gleichzeitig die Transmission für diese Strahlung erhöht wird.

In einer besonders bevorzugten Ausführungsform der erfindungsgemäßen Dreifach-Isolierverglasung weist die erfindungsgemäße Dreifach-Isolierverglasung mindestens eine poröse Schicht auf, welche Siliziumdioxid umfasst. Dadurch kann eine Antireflexschicht erhalten werden, die eine besonders hohe Transmission im Infrarotbereich und insbesondere eine hohe Transmission für Strahlung im nahen Infrarotbereich aufweist und dabei zudem sehr widerstandsfähig und abriebfest ist. Zudem bleiben poröse Schichten, welche Siliziumdioxid umfassen, auch bei/nach einem eventuellen Tempervorgang weitgehend unverändert. Ein Tempervorgang kann sogar zur Trocknung einer solchen Schicht genutzt werden.

In einer weiteren bevorzugten Ausführungsform der erfindungsgemäßen Dreifach-Isolierverglasung kann eine poröse Siliziumdioxidschicht durch ein Tauchverfahren beziehungsweise ein Sol-Gel-Verfahren aufgebracht werden. Vorteilhaft dabei ist, dass durch ein solches Verfahren beide Seiten einer Glasscheibe gleichzeitig mit einer Antireflexschicht ausgestattet werden können. Dabei kann der Solargewinn durch zwei Antireflexschichten noch weiter verbessert werden, da die Transmission von Strahlung, die zum Solargewinn beitragen kann, durch eine zweite Antireflexschicht noch weiter erhöht werden kann.

Bei der erfindungsgemäßen Dreifach-Isolierverglasung weist mindestens eine Glasscheibe einen Gehalt an Oxiden, welche Strahlung mit einer Wellenlänge von 100 nm bis 1,1 mm absorbieren, und insbesondere an Eisenoxid, weiter bevorzugt an Fe₂O₃, von weniger al 0,05 %, bevorzugt weniger als 0,02 %, bevorzugt weniger als 600 ppm, weiter bevorzugt weniger als 100 ppm auf. Durch die Verwendung solcher Glasscheiben kann der Solargewinn noch weiter verbessert werden, da dadurch mehr Strahlung zum Solargewinn beitragen kann.

In einer weiteren bevorzugten Ausführungsform der erfindungsgemäßen Dreifach-Isolierverglasung können insbesondere mindestens zwei Glasscheiben einen Gehalt an Oxiden, welche Strahlung mit einer Wellenlänge von 100 nm bis 1,1 mm absorbieren, und insbesondere an Eisenoxid, bevorzugt an Fe₂O₃, von weniger als 0,05 %, bevorzugt weniger als 0,02 %, weiter bevorzugt weniger als 600 ppm, weiter bevorzugt weniger als 100 ppm aufweisen. Durch die Verwendung von zwei solchen Glasscheiben kann der Solargewinn noch weiter verbessert werden, da dadurch mehr Strahlung zum Solargewinn beitragen kann. Dabei werden solche Glasscheiben bevorzugterweise als innere und/oder äußere Glasscheibe verwendet, um bereits durch die äußere Glasscheibe möglichst viel Strahlung, insbesondere im Infrarotbereich und bevorzugt im nahen Infrarotbereich, durchzulassen, wobei der Solargewinn erhöht wird.

In einer besonderen Ausführungsform der erfindungsgemäßen Dreifach-Isolierverglasung kann die innere Glasscheibe einen Gehalt an Oxiden, welche Strahlung mit einer Wellenlänge von 100 nm bis 1,1 mm absorbieren, und insbesondere an Eisenoxid, bevorzugt an Fe₂O₃, von weniger al 0,05 %, bevorzugt weniger als 0,02 %, weiter bevorzugt weniger als 600 ppm, weiter bevorzugt weniger als 100 ppm aufweisen. Dabei kann es dadurch zum Beispiel möglich sein, einen symmetrischen Aufbau der erfindungsgemäßen Dreifach-Isolierverglasung zu erreichen. Dies kann gegebenenfalls von Vorteil sein, da somit das Anbringen der Verglasung vereinfacht werden kann. In der Tat braucht bei einem symmetrischen Aufbau nicht auf eine besondere Ausrichtung der Verglasung beim Anbringen geachtet zu werden.

In einer weiteren bevorzugten Ausführungsform der erfindungsgemäßen Dreifach-Isolierverglasung kann die mittlere Glasscheibe, welche zwischen den zwei übrigen Glasscheiben der Dreifach-Isolierverglasung angeordnet ist, zusätzlich zur mindestens einen Antireflexschicht auf jeder ihrer Seiten mindestens eine Wärmedämmschicht aufweisen. Dadurch sind die Antireflexschichten und die Wärmedämmschicht(en) vor äußeren Einflüssen geschützt, da sich die Antireflexschichten und die Wärmedämmschicht(en) im Inneren der erfindungsgemäßen Dreifach-Isolierverglasung befinden und somit ihre Aufgaben geschützt hervorragend erfüllen können.

In einer weiteren bevorzugten Ausführungsform der erfindungsgemäßen Dreifach-lsolierverglasung kann die Dreifach-Isolierverglasung zusätzlich zu den mindestens zwei Antireflexschichten mindestens zwei Wärmedämmschichten umfassen. Durch mindestens zwei Antireflexschichten kann der Solargewinn noch weiter verbessert werden, da die Transmission von Strahlung, die zum Solargewinn beitragen kann, durch eine zweite Antireflexschicht noch weiter erhöht werden kann. Zudem ist es durch die Verwendung von zwei Wärmedämmschichten und insbesondere von zwei spektralselektiven Wärmedämmschichten möglich, die Isolierungswirkung der Verglasung weiter zu erhöhen und den Wärmedurchgangskoeffizienten (U-Wert) weiter zu reduzieren.

Bei der erfindungsgemäßen Dreifach-Isolierverglasung weist die mittlere Glasscheibe, welche zwischen den zwei übrigen Glasscheiben der Dreifach-Isolierverglasung angeordnet ist, Zudem ist es möglich, Glasscheiben, die mindestens eine Antireflexschicht auf jeder ihrer Seiten aufweisen, bevorzugt durch ein Eintauchverfahren beziehungsweise ein Sol-Gel-Verfahren herzustellen, sodass solche Glasscheiben vorteilhafterweise besonders einfach, zeitsparend und mit geringem Aufwand hergestellt werden können. Zudem kann es dadurch zum Beispiel möglich sein, einen symmetrischen Aufbau der erfindungsgemäßen Dreifach-Isoliervorglasung zu erreichen.

In einer weiteren Ausführungsform der erfindungsgemäßen Dreifach-Isolierverglasung kann zusätzlich die äußere Glasscheibe der Dreifach-Isolierverglasung mindestens eine Antireflexschicht und/oder mindestens eine Wärmedämmschicht aufweisen.

Sofern die äußere Glasscheibe dabei sowohl mindestens eine Wärmedämmschicht als auch mindestens eine Antireflexschicht aufweist, sind diese bevorzugt auf gegenüberliegenden Seiten der Glasscheibe angeordnet. Besonders bevorzugt kann mindestens eine Antireflexschicht dabei auf der nach außen weisenden Seite der äußeren Glasscheibe angeordnet sein, wobei mindestens eine Wärmedämmschicht auf der nach innen weisenden Seite angeordnet sein kann. Dadurch kann die Reflexion von eingehender Strahlung, insbesondere Sonnenstrahlung im Infrarotbereich und bevorzugt im nahen Infrarotbereich, bereits an der nach außen weisenden Seite der mittleren Glasscheibe reduziert werden, um die Transmission der vorgenannten Strahlung gegebenenfalls zumindest durch die mittlere Glasscheibe bevorzugt möglichst zu erhöhen. Des Weiteren kann Strahlung im Infrarotbereich und insbesondere im fernen Infrarotbereich bereits an der nach innen weisenden Seite der mittleren Glasscheibe reflektiert werden. Dadurch kann der Solargewinn und/oder der U-Wert weiter optimiert werden.

In einer weiteren Ausführungsform der erfindungsgemäßen Dreifach-Isolierverglasung kann zusätzlich die innere Glasscheibe der Dreifach-Isolierverglasung mindestens eine Wärmedämmschicht aufweisen. Die innere Glasscheibe der erfindungsgemäßen Dreifach-Isolierverglasung im Sinne der vorliegende Erfindung ist dabei nicht die mittlere Glasscheibe, welche zwischen den übrigen beiden Glasscheiben angeordnet ist, sondern die Glasscheibe, die bei angebrachter Verglasung auf der Seite eines Innenraums liegt. Die äußere Glasscheibe ist demnach die Glasscheibe, die bei angebrachter Verglasung auf der Seite eines Außenbereichs liegt. Die innere und die äußere Glasscheibe sind demnach um die mittlere Glasscheibe angeordnet. Dadurch kann Strahlung im Infrarotbereich, insbesondere Strahlung im fernen Infrarotbereich, bereits an der inneren Glasscheibe reflektiert werden, um den Solargewinn und/oder den U-Wert weiter zu optimieren. Bevorzugterweise kann mindestens eine Wärmedämmschicht dabei auf der nach außen weisenden Seite der inneren Scheibe aufgebracht werden. Dadurch liegt die Wärmedämmschicht geschützt vor äußeren Einflüssen im Inneren der erfindungsgemäßen Dreifach-Isolierverglasung.

In einer besonders bevorzugten Ausführungsform der erfindungsgemäßen Dreifach-Isolierverglasung kann zusätzlich die äußere Glasscheibe der Dreifach-Isolierverglasung mindestens eine Wärmedämmschicht auf ihrer nach innen weisenden Seite umfassen, wobei die mittlere Glasscheibe, welche zwischen den zwei übrigen Glasscheiben der Dreifach-Isolierverglasung angeordnet ist, beidseitig eine Antireflexschicht aufweist und wobei ferner die innere Glasscheibe der Dreifach-Isolierverglasung mindestens eine Wärmedämmschicht auf ihrer nach außen weisenden Seite umfasst. Dadurch liegen sowohl die Wärmedämmschichten als auch die Antireflexschichten geschützt von äußeren Einflüssen im Inneren der Verglasung. Darüber hinaus können auch die äußere und die innere Glasscheibe der erfindungsgemäßen Dreifach-Isolierverglasung bevorzugt auf ihrer jeweils nach außen beziehungsweise innen weisenden Seite ebenfalls eine Antireflexschicht aufweisen. Dadurch kann der Solargewinn bei bevorzugt gleichem und/oder besserem U-Wert weiter erhöht werden.

Der Ug-Wert einer erfindungsgemäßen Dreifach-Isolierverglasung kann dabei zum Beispiel zwischen 0,3 W/m².K und 1 W/m².K, besonders bevorzugt zwischen 0,5 W/m².K und 0,9 W/m².K liegen. Der g-Wert kann dabei gleichzeitig zwischen 0,55 beziehungsweise 55 % und 0,99 beziehungsweise 99 %, bevorzugt zwischen 0,57 beziehungsweise 57 % und 0,9 beziehungsweise 90 %, weiter bevorzugt zwischen 0,59 beziehungsweise 59 % und 0,85 beziehungsweise 85 %, weiter bevorzugt zwischen 0,6 beziehungsweise 60 % und 0,80 beziehungsweise 80 %, weiter bevorzugt zwischen 0,62 beziehungsweise 62 % und 0,75 beziehungsweise 75 %, besonders bevorzugt zwischen 0,65 beziehungsweise 65 % und 0,7 beziehungsweise 70 % liegen.

### Ausführungsbeispiel:

In einer besonders bevorzugten Ausführungsform der erfindungsgemäßen Dreifach-Isolierverglasung kann die äußere Glasscheibe der Dreifach-Isolierverglasung mindestens eine Wärmedämmschicht auf ihrer nach innen weisenden Seite umfassen, wobei die mittlere Glasscheibe, welche zwischen den zwei übrigen Glasscheiben der Dreifach-Isolierverglasung angeordnet ist, beidseitig eine Antireflexschicht aufweist und wobei ferner die innere Glasscheibe der Dreifach-Isolierverglasung mindestens eine Wärmedämmschicht auf ihrer nach außen weisenden Seite umfasst. Dadurch liegen sowohl die Wärmedämmschichten als auch die Antireflexschichten geschützt von äußeren Einflüssen im Inneren der Verglasung.

Die Zwischenräume der erfindungsgemäßen Dreifach-Isolierverglasung können hier mit Xenon gefüllt sein.

Beide Wärmedämmschichten können dabei folgenden Aufbau aufweisen:
- eine 10 nm dicke Siliziumnitritschicht
- eine 27 nm dicke Zinnoxidschicht
- eine 6 nm dicke NiCrOx-Schicht
- eine 12 nm dicke Silberschicht
- eine 7 nm dicke Zinkoxidschicht
- eine 8 nm dicke TiO₂-Schicht
- eine 17 nm dicke Siliziumnitritschicht, welche auf eine Glasscheibe aufgebracht wird.

Beide Wärmedämmschichten sind demnach asymmetrisch, da sich der Schichtaufbau auf beiden Seiten der Silberschicht sowohl durch die Materialbeschaffenheit einzelner Schichten als auch durch die Reihenfolge der Schichten unterscheidet.

Darüber hinaus sind beide Wärmedämmschichten auch spektralselektiv, sodass eine möglichst hohe Transmission für Strahlung im nahen Infrarotbereich und eine möglichst hohe Reflexion von Strahlung im fernen Infrarotbereich ermöglicht werden kann.

Des Weiteren sind beide Antireflexschichten, welche auf der mittleren Glasscheibe aufgebracht sind, poröse Siliziumdioxidschichten.

Dabei wird ein symmetrischer Aufbau der erfindungsgemäßen Dreifach-Isolierverglasung erreicht, der das Anbringen der Verglasung vereinfacht, da keine besondere Ausrichtung der Verglasung nötig ist.

Zudem weisen sowohl die innere als auch die äußere Glasscheibe der erfindungsgemäßen Dreifach-Isolierverglasung einen Gehalt an Eisenoxid, insbesondere Fe₂O₃ von weniger als 0,05 % auf.

Durch diese besondere Ausgestaltung der erfindungsgemäßen Dreifach-Isolierverglasung kann der Wärmedurchgangskoeffizient (U-Wert) durch die Wärmedämmschichten und die zwei Zwischenräume der Dreifach-Isolierverglasung möglichst reduziert werden, wobei gleichzeitig der Solargewinn jedoch erhöht werden kann, da mehr Strahlung, insbesondere mehr Strahlung im Infrarotbereich und bevorzugt im nahen Infrarotbereich, zum Solargewinn beitragen kann.

Eine solche Verglasung kann dabei einen Ug-Wert von 0,5 W/m².K und einen g-Wert 0,62 beziehungsweise 62 % aufweisen.

## Patentansprüche

1. Dreifach-Isolierverglasung, welche drei auf Abstand zueinander angeordnete Glasscheiben, die zwei Zwischenräume definieren, umfasst,
wobei mindestens eine Glasscheibe auf mindestens einer ihrer Seiten eine Wärmedämmschicht umfasst und mindestens eine Glasscheibe auf mindestens einer ihrer Seiten eine Antireflexschicht umfasst, wobei mindestens eine Glasscheibe der Dreifach-Isolierverglasung einen Gehalt an Oxiden, welche Strahlung mit einer Wellenlänge von 100 nm bis 1,1 mm absorbieren, von weniger als 0,05 % aufweist, **dadurch gekennzeichnet, dass** die mittlere Glasscheibe, welche zwischen den zwei übrigen Glasscheiben der Dreifach-Isolierverglasung angeordnet ist, mindestens eine Antireflexschicht auf jeder ihrer Seiten aufweist.

2. Dreifach-Isolierverglasung nach Anspruch 1
**dadurch gekennzeichnet, dass**
sich mindestens eine Glasscheibe, welche auf mindestens einer ihrer Seiten eine Wärmedämmschicht umfasst von mindestens einer Glasscheibe, welche auf mindestens einer ihrer Seiten eine Antireflexschicht umfasst unterscheidet.

3. Dreifach-Isolierverglasung nach einem der Ansprüche 1 oder 2
**dadurch gekennzeichnet, dass**
mindestens einer der Zwischenräume mit Luft, Stickstoff, einem Edelgas oder einer Mischung davon gefüllt ist.

4. Dreifach-Isolierverglasung nach einem oder mehreren der Ansprüche 1 bis 3
**dadurch gekennzeichnet, dass**
mindestens eine Wärmedämmschicht eine Low-E-Schicht oder ein Low-E-Schichtaufbau ist.

5. Dreifach-Isolierverglasung nach einem oder mehreren der Ansprüche 1 bis 4
**dadurch gekennzeichnet, dass**
mindestens eine Wärmedämmschicht eine asymmetrische Low-E-Schicht oder ein asymmetrischer Low-E-Schichtaufbau ist.

6. Dreifach-Isolierverglasung nach einem oder mehreren der Ansprüche 1 bis 5
**dadurch gekennzeichnet, dass**
sie mindestens zwei unterschiedliche Wärmedämmschichten umfasst.

7. Dreifach-Isolierverglasung nach einem oder mehreren der Ansprüche 1 bis 6
**dadurch gekennzeichnet, dass**
mindestens eine Antireflexschicht eine hohe Transmission im Infrarotbereich aufweist.

8. Dreifach-Isolierverglasung nach einem oder mehreren der Ansprüche 1 bis 7
**dadurch gekennzeichnet, dass**
die Antireflexschicht eine poröse Schicht ist, welche Siliziumdioxid umfasst.

9. Dreifach-Isolierverglasung nach einem oder mehreren der Ansprüche 1 bis 8
**dadurch gekennzeichnet, dass**
die mittlere Glasscheibe, welche zwischen den zwei übrigen Glasscheiben der Dreifach-Isolierverglasung angeordnet ist, zusätzlich mindestens eine Wärmedämmschicht aufweist.

10. Dreifach-Isolierverglasung nach einem oder mehreren der Ansprüche 1 bis 9
**dadurch gekennzeichnet, dass**
sie mindestens zwei Wärmedämmschichten umfasst.

11. Dreifach-Isolierverglasung nach einem oder mehreren der Ansprüche 1 bis 10
**dadurch gekennzeichnet, dass**
die äußere Glasscheibe der Dreifach-Isolierverglasung mindestens eine Antireflexschicht und/oder mindestens eine Wärmedämmschicht aufweist.

12. Dreifach-Isolierverglasung nach einem oder mehreren der Ansprüche 1 bis 11
**dadurch gekennzeichnet, dass**
die innere Glasscheibe der Dreifach-Isolierverglasung mindestens eine Wärmedämmschicht aufweist.

13. Dreifach-Isolierverglasung nach einem oder mehreren der Ansprüche 1 bis 12
**dadurch gekennzeichnet, dass**
die äußere Glasscheibe der Dreifach-Isolierverglasung mindestens eine Wärmedämmschicht auf ihrer nach innen weisenden Seite umfasst, wobei die mittlere Glasscheibe, welche zwischen den zwei übrigen Glasscheiben der Dreifach-Isolierverglasung angeordnet ist, beidseitig eine Antireflexschicht aufweist und wobei ferner die innere Glasscheibe der Dreifach-Isolierverglasung mindestens eine Wärmedämmschicht auf ihrer nach innen weisenden Seite umfasst.

## Claims

1. Triple-paned insulated glazing comprising three glass panes that are arranged at a distance from each other and that define two spaces between them, whereby at least one glass pane has a thermally insulating coating on at least one of its sides, and at least one glass pane has an anti-reflective coating on at least one of its sides, whereby at least one glass pane of the triple-paned insulated glazing has an oxide content of less than 0.05%, which absorbs radiation in the wavelength of 100 nm to 1.1 mm, **characterized in that** the middle glass pane, which is arranged between the two other glass panes of the triple-paned insulated glazing, has at least one anti-reflective coating on each of its sides.

2. The triple-paned insulated glazing according to Claim 1,
**characterized in that**
at least one glass pane that has a thermally insulating coating on at least one of its sides differs from at least one glass pane that has an anti-reflective coating on at least one of its sides.

3. The triple-paned insulated glazing according to either Claim 1 or Claim 2,
**characterized in that**
at least one of the spaces is filled with air, nitrogen, a noble gas or a mixture thereof.

4. The triple-paned insulated glazing according to one or more of Claims 1 to 3,
**characterized in that**
at least one thermally insulating coating is a low-emissivity coating or a low-emissivity layered structure.

5. The triple-paned insulated glazing according to one or more of Claims 1 to 4,
**characterized in that**
at least one thermally insulating coating is an asymmetrical low-emissivity coating or an asymmetrical low-emissivity layered structure.

6. The triple-paned insulated glazing according to one or more of Claims 1 to 5,
**characterized in that**
it contains two different thermally insulating coatings.

7. The triple-paned insulated glazing according to one or more of Claims 1 to 6,
**characterized in that**
at least one anti-reflective coating has a high transmission in the infrared range.

8. The triple-paned insulated glazing according to one or more of Claims 1 to 7,
**characterized in that**
the anti-reflective coating is a porous coating comprising silicon dioxide.

9. The triple-paned insulated glazing according to one or more of Claims 1 to 8,
**characterized in that**
the middle glass pane that is arranged between the two other glass panes of the triple-paned insulated glazing additionally has at least one thermally insulating coating.

10. The triple-paned insulated glazing according to one or more of Claims 1 to 9,
**characterized in that**
it comprises at least two thermally insulating coatings.

11. The triple-paned insulated glazing according to one or more of Claims 1 to 10,
**characterized in that**
the outer glass pane of the triple-paned insulated glazing has at least one anti-reflective coating and/or at least one thermally insulating coating.

12. The triple-paned insulated glazing according to one or more of Claims 1 to 11,
**characterized in that**
the inner glass pane of the triple-paned insulated glazing has at least one thermally insulating coating.

13. The triple-paned insulated glazing according to one or more of Claims 1 to 12,
**characterized in that**
the outer glass pane of the triple-paned insulated glazing has at least one thermally insulating coating on its side facing inwards, whereby the middle glass pane, which is arranged between the two other glass panes of the triple-paned insulated glazing, has an anti-reflective coating on both sides, and moreover whereby the inner glass pane of the triple-paned insulated glazing has at least one thermally insulating coating on its side facing inwards.

## Revendications

1. Triple vitrage isolant comprenant trois vitres en verre disposées à distance l'une de l'autre et définissant deux espaces intermédiaires, au moins une vitre en verre comprenant une couche d'isolation thermique sur au moins l'un de ses côtés et au moins une vitre en verre comprenant une couche antireflet sur au moins l'un de ses côtés, au moins une vitre en verre du triple vitrage isolant présentant une teneur de moins de 0,05 % en oxydes qui absorbent un rayonnement d'une longueur d'onde de 100 nm à 1,1 mm, **caractérisé en ce que** la vitre en verre centrale qui est située entre les deux autres vitres en verre du triple vitrage isolant comporte au moins une couche antireflet sur chacun de ses côtés.

2. Triple vitrage isolant selon la revendication 1, **caractérisé en ce qu'**au moins une vitre en verre qui comprend une couche d'isolation thermique sur au moins l'un de ses côtés est différente d'au moins une vitre en verre qui comprend une couche antireflet sur au moins l'un de ses côtés.

3. Triple vitrage isolant selon la revendication 1 ou 2, **caractérisé en ce qu'**au moins l'un des espaces intermédiaires est rempli d'air, d'azote, d'un gaz noble ou d'un mélange de ces substances.

4. Triple vitrage isolant selon l'une ou plusieurs des revendications 1 à 3, **caractérisé en ce qu'**au moins une couche d'isolation thermique est une couche à basse émissivité ou une structure de couches à basse émissivité.

5. Triple vitrage isolant selon l'une ou plusieurs des revendications 1 à 4, **caractérisé en ce qu'**au moins une couche d'isolation thermique est une couche asymétrique à basse émissivité ou une structure asymétrique de couches à basse émissivité.

6. Triple vitrage isolant selon l'une ou plusieurs des revendications 1 à 5, **caractérisé en ce qu'**il comprend au moins deux couches d'isolation thermique différentes.

7. Triple vitrage isolant selon l'une ou plusieurs des revendications 1 à 6, **caractérisé en ce qu'**au moins une couche antireflet présente une transmission élevée dans la plage infrarouge.

8. Triple vitrage isolant selon l'une ou plusieurs des revendications 1 à 7, **caractérisé en ce que** la couche antireflet est une couche poreuse qui comprend du dioxyde de silicium.

9. Triple vitrage isolant selon l'une ou plusieurs des revendications 1 à 8, **caractérisé en ce que** la vitre en verre centrale qui est située entre les deux autres vitres en verre du triple vitrage isolant comporte additionnellement au moins une couche d'isolation thermique.

10. Triple vitrage isolant selon l'une ou plusieurs des revendications 1 à 9, **caractérisé en ce qu'**il comprend au moins deux couches d'isolation thermique.

11. Triple vitrage isolant selon l'une ou plusieurs des revendications 1 à 10, **caractérisé en ce que** la vitre en verre extérieure du triple vitrage isolant comporte au moins une couche antireflet et/ou au moins une couche d'isolation thermique.

12. Triple vitrage isolant selon l'une ou plusieurs des revendications 1 à 11, **caractérisé en ce que** la vitre en verre intérieure du triple vitrage isolant comporte au moins une couche d'isolation thermique.

13. Triple vitrage isolant selon l'une ou plusieurs des revendications 1 à 12, **caractérisé en ce que** la vitre en verre extérieure du triple vitrage isolant comprend au moins une couche d'isolation thermique sur son côté tourné vers l'intérieur, la vitre en verre centrale qui est située entre les deux autres vitres en verre du triple vitrage isolant comportant une couche antireflet sur ses deux côtés et la vitre en verre intérieure du triple vitrage isolant comprenant en outre au moins une couche d'isolation thermique sur son côté tourné vers l'intérieur.
